# EUROPEAN PATENT APPLICATION

(11) **EP 1 206 055 A2**
(43) Date of publication of application: **15.05.2002**
(21) Application number: 01309448.7
(22) Date of filing: 07.11.2001
(51) Int. Cl.: H04B 7/26

(54) **Time slot assignment method and apparatus in mobile communication system**

(30) Priority: 09.11.2000 JP 2000342551
(71) Applicant: NTT DoCoMo, Inc., Tokyo 100-6150 (JP)
(72) Inventor: Yamada, Mayu, Yokohama-shi, Kanagawa 236-0031 (JP); Futakata, Toshiyuki, Yokosuka-shi, Kanagawa 239-0842 (JP); Moon, Sung Uk, Yokosuka-shi, Kanagawa 238-0031 (JP)
(74) Representative: Beresford, Keith Denis Lewis

(57) **Abstract**

A mobile communication system can limit interference from mobile stations under an adjacent base station to a minimum. In response to a time slot assignment request, a time slot management section (501) compares available time slots stored in an assignable time slot database (503) with a priority table of the time slot assignment, which is stored in the priority database (502), and assigns the time slots in accordance with the compared result. After completing the assignment, it stores a table of the frame state indicating new available time slots into the assignable time slot database (503).

## Description

The present invention relates to a time slot assignment method and apparatus in a mobile communication system employing a radio communication method using a TDMA and TDD scheme.

A TDD (Time Division Duplex) scheme is an access scheme that implements uplink channels and downlink channels by time dividing bit stream as resources to be transmitted in a single frequency band, and by assigning them to the uplink/downlink. The TDD scheme is generally used with a multiplexing scheme such as TDMA (Time Division Multiple Access) and CDMA (Code Division Multiple Access).

At present, with respect to the IMT-2000 CDMA TDD scheme (the access scheme of which is CDMA and TDMA and TDD), the standard of which the ITU (International Telecommunication Union) is currently creating, the scheme is being studied that adaptively changes time slot assignments to the uplink/downlink channels according to the traffic or the like. A conventional technique will be described by way of example of the IMT-2000 CDMA TDD scheme.

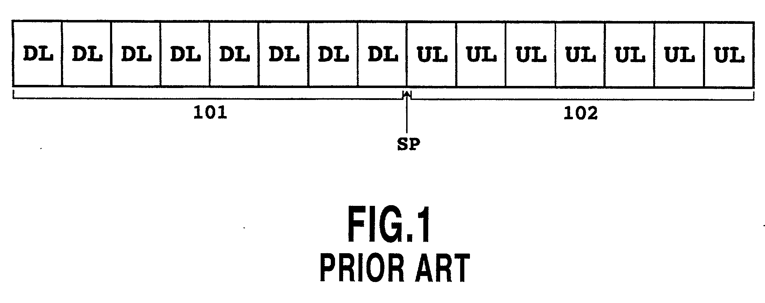

Fig. 1 illustrates a frame structure of the IMT-2000 CDMA TDD scheme. In this figure, DLs 101 are time slots assigned to downlink channels, and Uls 102 are time slots assigned to uplink channels. Conventionally, the numbers and positions of the time slots in a frame to be assigned to the uplink/downlink are set in advance.

In the example of Fig. 1, the number of time slots assigned to the uplink and downlink are seven and eight, respectively. Their positions are established in the first half and second half of divided two parts in the frame so that a switching point (called "SP" from now on) is one. Although the number of the SP is one in the example of Fig. 1, it is not necessarily limited to one.

When an assignment request occurs, and if a required uplink/downlink time slot is available, the time slot is assigned considering the interference level and the like between the time slots.

Since the TDD scheme uses the same frequency for the uplink/downlink channels, when uplink and downlink channels are simultaneously assigned in adjacent areas, an interference wave from a mobile station in the adjacent area can be greater than a desired downlink wave in the present area, and hence the mobile station suffered from the interference has a problem of quality degradation in the time slots. Here, the area refers to a minimum region to which the time slot is assigned.

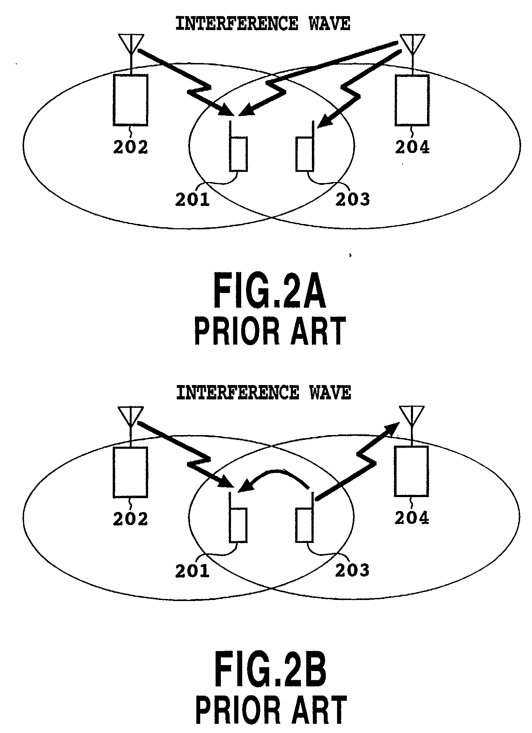

Figs. 2A and 2B are diagrams illustrating the effect of the interference wave in the adjacent areas. In the example, a minimum region to which the time slots are assigned is assumed to be belonging to a single base station. Fig. 2A illustrates a case where the adjacent areas uses the same numbers and positions of time slots in common; and Fig. 2B illustrates a case where the adjacent areas uses different numbers and positions of time slots.

In Fig. 2A, as for a mobile station 201, a signal transmitted from a base station 202 is a desired wave, and a signal transmitted from a base station 204 is an interference wave.

In an example as shown in Fig. 2B, an uplink channel from a mobile station 201 is assigned to the area under the base station, and at the same time a downlink channel to the mobile station 201 is assigned to the area under another base station. Thus, as for the mobile station 201, a signal transmitted from the base station 202 is a desired wave, and a signal transmitted from the mobile station 203 becomes an interference wave, thereby increasing the interference to the mobile station 201.

In view of this, the numbers and positions of the time slots of the uplink/downlink assignment are changed not on an area by area basis, but on a system by system basis. In this case, the system refers not only to a system comprising a plurality of base stations under a single radio network controller, but also to a system comprising a plurality of base stations under a plurality of radio network controllers.

The conventional time slot assignment, however, has a problem in that since the numbers of the time slots assignable to the uplink and downlink are uniquely determined for the system, even if downlink traffic increases markedly and the uplink includes available time slots, they cannot be assigned to the downlink channels.

In addition, it has another problem in that the time slot arrangement of the entire system must be changed to cope with the asymmetry between the uplink/downlink traffic of an area.

Moreover, changing the time slot assignments to uplink/downlink channels for each base station independently will result in the quality degradation because of the interference from mobile stations in adjacent areas.

Therefore, an object of the present invention is to provide a time slot assignment method in a mobile communication system and a time slot assignment apparatus in a mobile communication system capable of limiting the interference from mobile stations in adjacent areas to a minimum.

According to a first aspect of the present invention, there is provided a time slot assignment method in a mobile communication system employing a TDMA and TDD scheme that assigns time slots, which are formed by time dividing a frame of a frequency band, to uplink channels and downlink channels, the time slot assignment method in a mobile communication system comprising the steps of: giving uplink or downlink priorities to all the time slots in the frame; receiving a time slot assignment request from at least one of the uplink channels and the downlink channels; and assigning the time slots in the frame in response to the time slot assignment request received at the receiving step, in accordance with the priorities given at the giving step.

Thus, it can assign the time slots on an area by area basis in accordance with the state of the traffic, interference and the like, thereby making it possible to increase the efficiency of the frequency.

Here, the giving step may give the same priority to a plurality of the time slots included in the frame.

Thus, it can increase the efficiency of the frequency even when the number of the time slots has the upper/lower limit in the assignment of the uplink/downlink channels in the system.

The giving step may store the given priorities in a memory means, and the assigning step may assign the time slots in the frame in accordance with the properties stored in the memory means.

Thus, it can carry out the time slot assignment on an area by area basis without changing the numbers of the uplink and downlink time slots on a system by system basis.

According to a second aspect of the present invention, there is provided a time slot assignment apparatus in a mobile communication system employing a TDMA and TDD scheme that assigns time slots, which are formed by time dividing a frame of a frequency band, to uplink channels and downlink channels, the time slot assignment apparatus in a mobile communication system comprising: memory means for storing uplink or downlink priorities of all the time slots in the frame; receiving means for receiving a time slot assignment request from at least one of the uplink channels and the downlink channels; and assignment means for assigning the time slots in the frame in response to the time slot assignment request received by the receiving means, in accordance with the priorities store in the memory means.

Here, the memory means may give the same priority to a plurality of the time slots included in the frame.

The assignment means may decide the priorities of the time slots to be assigned in accordance with the priorities stored in the memory means.

According to the present invention, the number of the time slots to be assigned is adaptively determined in accordance with the traffic state.

More specifically, the number of the time slots to be assigned is not predetermined, but the time slots are given priorities so that they are assigned in accordance with the priorities.

In this case, the same priority can be assigned to a plurality of time slots. Thus, the numbers of the uplink/downlink time slots can be varied adaptively in accordance with the traffic state. In addition, giving lower priorities to the time slots that are likely subjected to the interference from the mobile stations in the adjacent areas makes it possible to limit the interference to a minimum.

Therefore, assigning the time slots on an area by area basis when the traffic increases markedly can achieve the time slot assignment to the uplink/downlink channels in response to the required traffic, thereby making it possible to utilize the frequency with high efficiency. Furthermore, the interference from the mobile stations in the adjacent areas can be limited to a minimum.

According to the present invention, the time slot assignment is possible in response to the traffic and interference on an area by area basis, thereby increasing the efficiency of the frequency.

The above and other objects, effects, features and advantages of the present invention will become more apparent from the following description of embodiments thereof taken in conjunction with the accompanying drawings, which are described by way of example only.
Fig. 1 is a diagram illustrating a frame structure of a conventional TDD system;
Figs. 2A and 2B are diagrams illustrating the effect of interference waves in adjacent areas;
Fig. 3 is a diagram showing an example of priorities assigned to individual time slots in a frame structure of a TDD system;
Fig. 4 is a diagram showing another example of priorities assigned to individual time slots in a frame structure of a TDD system;
Fig. 5 is a functional block diagram of a time slot assignment apparatus in accordance with an embodiment of the present invention;
Fig. 6A, 6B, 6C and 6D are diagrams showing creating procedures in comparing processing carried out in the time slot assignment apparatus, wherein Fig. 6A shows a table of priority, Fig. 6B shows a current frame, Fig. 6C shows the priority determined by the comparing processing, and Fig. 6D shows a state of a frame stored in an assignable time slot database;
Fig. 7 is a diagram showing an example of priorities assigned to individual time slots in a frame structure of a TDD system;
Fig. 8 is a diagram showing another example of priorities assigned to individual time slots in a frame structure of a TDD system; and
Fig. 9 is a flow chart showing a time slot assignment method according to an embodiment.

The preferred embodiments in accordance with the present invention will now be described in detail with reference to the accompanying drawings. In the following embodiments, although a CDMA scheme (CDMA and TDMA) is taken as an example, the access scheme is also effective for TDMA or CDMA.

### (First Embodiment)

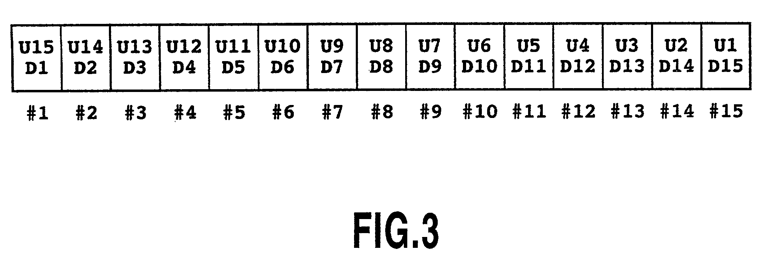

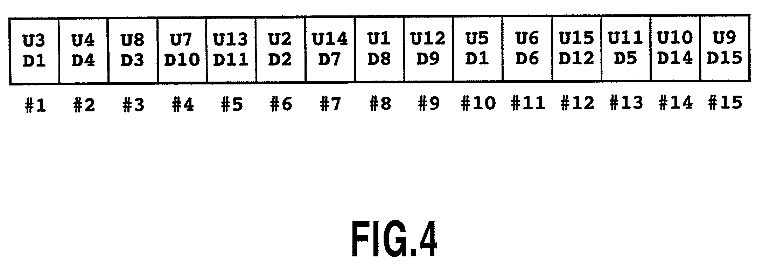

Figs. 3 and 4 each show an example of priorities assigned to individual time slots in a frame structure of a TDD system. Here, a TDD system with 15 time slots per frame is taken as an example.

In Figs. 3 and 4, the letter "U" in the time slots represents an uplink, the letter "D" represents a downlink, and a number following these letters represents the priority. These are examples of a frame structure of an uplink/downlink with a single SP (switching point).

In the example of Fig. 3, uplink priorities are assigned to the time slot numbers #1-#15 in ascending order, and downlink priorities are assigned to the time slot numbers #15-#1 in descending order. On the other hand, in the example of Fig. 4, the priorities are assigned at random. The priorities assigned to the individual time slots in the frame can be either common to a system or proper to each area in the system.

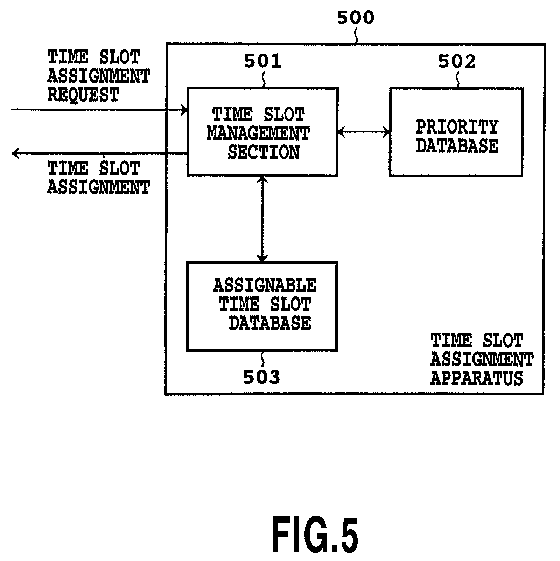

Fig. 5 is a functional block diagram of a time slot assignment apparatus in accordance with the present embodiment. A time slot assignment apparatus 500 can be implemented not only as a part of a base station, but also as a part of a control apparatus, a higher-order apparatus of the base station.

As shown in Fig. 5, the time slot assignment apparatus 500 comprises a time slot management section 501; and a priority database 502 and an assignable time slot database 503 which are looked up by the time slot management section 501. The priority database 502 stores in advance a table indicating the priority of the time slot assignment. On the other hand, the assignable time slot database 503 stores a table indicating the state of a current frame, that is, available time slots in the frame, and updates it at fixed intervals and every time the time slot assignment processing terminates.

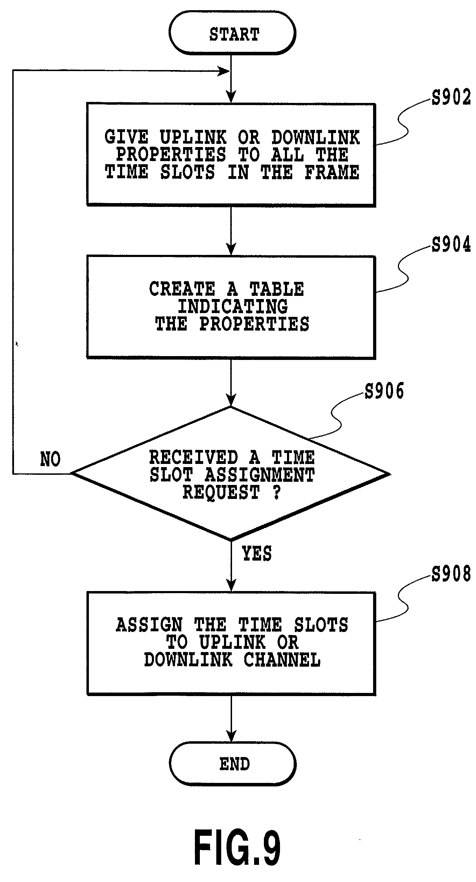

Next, we will describe time slot assignment method executed by the time slot assignment apparatus 500 with reference to Fig. 9.

Firstly, uplink or downlink properties are given to all the time slots in the frame by the time slot management section 501 (S902). Next, a table indicating the priorities of the time slot assignment is created on the basis of the given priorities by the time slot management section 501 (S904). The created table is stored in the time slot database 502.

When a signal transmitted via an uplink or downlink makes a time slot assignment request in step S906, the time slot management section 501 compares currently available time slots which are stored in the assignable time slot database 503 with the priority table which is stored in the priority database 502 and has the contents as shown in Fig. 3 or 4, and decides the assignable time slots to the uplink and downlink, respectively (S908). Then, the time slot management section 501 sequentially assigns to the channels the time slots which are not yet assigned and have higher priorities in the table stored in the assignable time slot database 503.

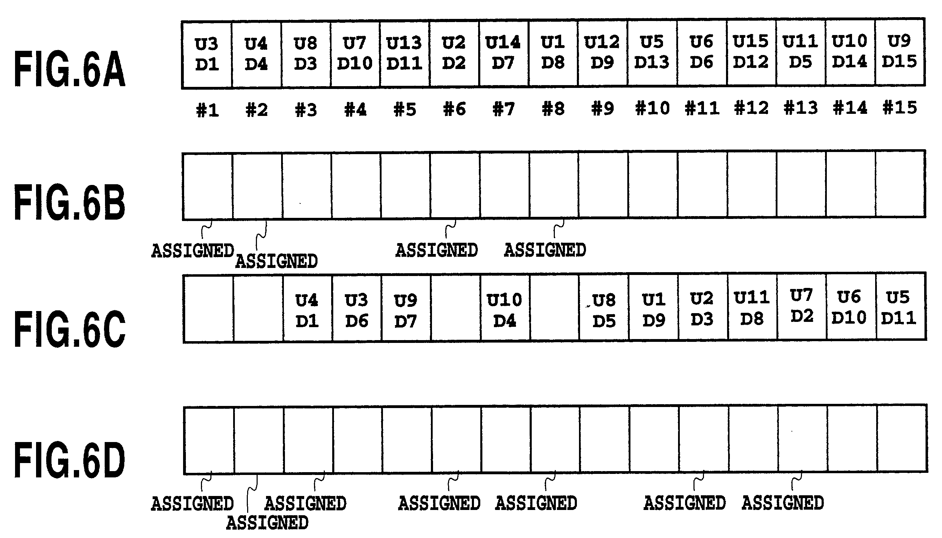

Fig. 6A, 6B, 6C and 6D illustrate concrete processing procedures the time slot assignment apparatus carries out. The priority database 502 in the time slot assignment apparatus 500 stores the priority table as shown in Fig. 6A. On the other hand, Fig. 6B shows the current frame stored in the assignable time slot database 503, in which four slots #1, #2, #6 and #8 have already been assigned to the uplink channels.

Receiving a time slot assignment request for three slots to downlink channels, the time slot management section 501 compares the priority table as shown in Fig. 6A with the available time slots as shown in Fig. 6B, and decides the priorities of the time slots to be assigned next to the already assigned time slots. Fig. 6C shows the priorities decided as a result of the comparing processing. For example, as for the uplink channels, the old priorities 5-15 are shifted to new priorities 1-11, respectively. As for the downlink channels, the comparing processing is carried out in a similar manner.

As a result of the comparing processing, the time slot management section 501 assigns to the downlink channels the time slots with higher priorities, that is, the time slots with the numbers #3, #13 and #11.

Finally, the time slot management section 501 stores the table indicating the state of the current frame into the assignable time slot database 503. Fig. 6D shows the contents of the table.

When an increasing number of downlink time slots is required in a particular area, the time slot assignment apparatus 500 as shown in Fig. 5 can assign the time slots with lower priority in the downlink assignable time slot table, thereby making it possible to increase the number of the downlink time slots.

Therefore, when the uplink and downlink traffic volumes differ from each other because of the asymmetry, the time slot assignment on an area by area basis is possible without changing the numbers of the uplink/downlink time slots on a system by system basis. Thus, the time slot assignment is possible according to the traffic, interference and the like, making it possible to efficiently utilize the frequency.

In addition, assigning low priorities to the time slots that are likely to suffer interference from the mobile stations in the adjacent areas can limit the interference to a minimum.

### (Second Embodiment)

The present embodiment differs from the foregoing embodiment in that the number of the uplink or downlink time slots has an upper limit or lower limit in the system. An example of assignment priorities to such time slots will be described by way of example of a TDD system, the number of the time slots of which is assumed to be 15.

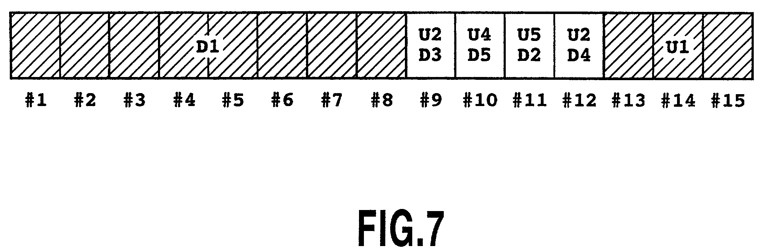

Fig. 7 shows an example of priorities assigned to the individual time slots in a frame structure of the TDD system. In the example as shown in Fig. 7, it is assumed that the lower limits of the numbers of the time slots defined in the system are three for the uplink, and eight for the downlink, and they have the highest priority in the uplink/downlink time slots. As for the remaining time slots, they are assigned priorities at random.

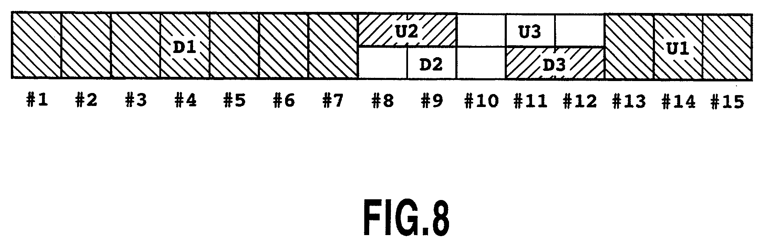

Fig. 8 shows another example of priorities assigned to the individual time slots in a frame structure of the TDD system. In the example as shown in Fig. 8, it is assumed as in Fig. 7 that the lower limits of the numbers of the time slots defined in the system are three for the uplink, and seven for the downlink, and they have the highest priority in the uplink/downlink time slots. The remaining time slots are divided into asymmetrical groups, and are assigned priorities each. The time slots included in each group are not necessarily consecutive.

In the priority assignment as shown in Figs. 7 and 8, the time slots of the lower limit numbers predetermined in the system are given the highest priority, and the remaining time slots are give lower priorities.

In other words, the groups of the time slots with the highest priority are considered the time slots dedicated to uplink/downlink channels, with the remaining time slots being assigned the priority in the same manner as in the foregoing embodiment.

To achieve the time slot assignment according to the priority of the present embodiment, the time slot assignment apparatus 500 as shown in Fig. 5 is usable. Specifically, the priority table with the contents as shown in Fig. 7 or 8 is stored in the priority database 502 in the time slot assignment apparatus 500 as shown in Fig. 5. The subsequent processing is the same as that of the foregoing embodiment.

With such processing, the present embodiment can offer an advantage similar to that of the foregoing embodiment, even if the lower limit or upper limit of the number of the uplink/downlink time slots to be assigned is predetermined in the system.

The present invention has been described in detail with respect to preferred embodiments, and it will now be apparent from the foregoing to those skilled in the art that changes and modifications may be made without departing from the invention in its broader aspects, and it is the intention, therefore, in the appended claims to cover all such changes and modifications as fall within the true spirit of the invention.

## Claims

1. A time slot assignment method in a mobile communication system employing a TDMA and TDD scheme that assigns time slots, which are formed by time dividing a frame of a frequency band, to uplink channels and downlink channels, said time slot assignment method in a mobile communication system **characterized by** comprising the steps of:
giving uplink or downlink priorities to all the time slots in the frame;
receiving a time slot assignment request from at least one of the uplink channels and the downlink channels; and
assigning the time slots in the frame in response to the time slot assignment request received at the receiving step, in accordance with the priorities given at the giving step.

2. The time slot assignment method as claimed in claim 1, **characterized in that** the giving step gives the same priority to a plurality of the time slots included in the frame.

3. The time slot assignment method as claimed in claim 1, **characterized in that** the giving step stores the given priorities in a memory means, and the assigning step assigns the time slots in the frame in accordance with the priorities stored in said memory means.

4. A time slot assignment apparatus in a mobile communication system employing a TDMA and TDD scheme that assigns time slots, which are formed by time dividing a frame of a frequency band, to uplink channels and downlink channels, said time slot assignment apparatus in a mobile communication system **characterized by** comprising:
memory means for storing uplink or downlink priorities of all the time slots in the frame;
receiving means for receiving a time slot assignment request from at least one of the uplink channels and the downlink channels; and
assignment means for assigning the time slots in the frame in response to the time slot assignment request received by said receiving means, in accordance with the priorities store in said memory means.

5. The time slot assignment apparatus as claimed in claim 4, **characterized in that** said memory means gives the same priority to a plurality of the time slots included in the frame.

6. The time slot assignment apparatus as claimed in claim 4, **characterized in that** said assignment means decides the priorities of the time slots to be assigned in accordance with the priorities stored in said memory means.
